# EUROPEAN PATENT SPECIFICATION

(11) **EP 1 545 241 B1**
(45) Date of publication and mention of the grant of the patent: **01.08.2007**
(21) Application number: 03792893.4
(22) Date of filing: 20.08.2003
(51) Int. Cl.: A23K 3/03

(54) **AQUEOUS PRESERVATIVE**
WÄSSRIGES KONSERVIERUNGSMITTEL
CONSERVATEUR AQUEUX

(30) Priority: 22.08.2002 NO 20024020
(43) Date of publication of application: 29.06.2005
(73) Proprietor: Addcon Nordic AS, 3936 Porsgrunn (NO)
(72) Inventor: HJORNEVIK, Leif, N-3714 Skien (NO); SELMER-OLSEN, Ingvar, N-1473 Lorenskog (NO)
(74) Representative: Wallace, Sheila Jane
(86) International application number: PCT/NO2003/000286
(87) International publication number: WO 2004/017753

(56) References cited:
- GB-A- 1 432 954
- GB-A- 2 159 387

## Description

The present invention relates to an aqueous preservative/acidifier for ensiling of grass and other agricultural crops comprising formic acid or formate salts or mixtures of formic acid and formate salts and lactose and/or lactose derivatives.

Preserving grass or other crops as silage in anaerobic conditions has been common practice for many years. A rapid drop in pH is important to inhibit plant respiration, enzymatic protein breakdown and development of undesired bacteria such as enterobacteria and clostridia. The only desired process is lactic acid fermentation, which stabilises silage at a low pH (approx. 4). High moisture silage should have a final pH below 4.2 to be stable against butyric acid fermentation. Using a common dosage (3 - 5 litres/ton) of formic acid-based silage additives gives an immediate drop in pH from approx. 6 to approx. 4.5. This is normally enough to knock out enterobacteria and to inhibit clostridia from developing until pH drops further as a consequence of lactic acid fermentation. Unfortunately, formic acid-based additives also tend to inhibit and delay the development of lactic acid bacteria (LAB). Literature has reported that certain dosages of acid silage additives may cause problems (Chamberlain, D.G. & Quig, J. 1987. Journal of the Science of Food and Agriculture, 38, 217-228). In these cases, the dosage has been too low to completely stop enterobacteria and clostridia but still high enough to restrict lactic acid bacteria from an efficient fermentation. This problem can often occur in practical farming because farmers typically want to save costs and use lower application rates than recommended.

GB 2 095 534 describes a composition for preserving green fodder which preferably contains 40 - 98 weight % of a component which increases the H⁺ ion concentration in the fodder, e.g. a mineral acid, formic acid or a combination of a formate salt and a phosphorous compound and 2-60 weight % of benzoic acid or a salt or derivative of benzoic acid. The composition may also contain other additives, such as sugars or sugar-containing substances, lactic acid bacteria, enzymes that break down cellulose and starch, and agents that control the solubility of the proteins of the fodder. The amount of sugar required to stimulate lactic acid bacteria is not assessed and it is not mentioned anything of which type of sugar that would be able to specifically stimulate LAB.

WO 00/08929 relates to aqueous preservatives, containing ammonium tetraformate or any other combination of formic acid and ammonia, for grass and other agricultural crops, fish and fish products and meat products, having reduced corrosiveness and irritation to skin, comprising 0.5 - 5 weight % glycerol. Preferably the content of glycerol is 0.75 - 1.5 weight %. The preservative may further contain at least one metal corrosion inhibitor and/or antioxidant. No ingredient which can stimulate the growth of lactic acid bacteria is present.

GB 2 159 387 relates to an additive composition suitable for use in the preservation of silage comprising a source of nitrite (such as sodium nitrite) and a source of lactose (such as whey) and, preferably, magnesite, a source of trace elements, sodium chloride, cereal meal and a synthetic flow aid. The additive composition may be added to green fodder such as grass, lucerne and/or clover. Because of many disadvantages related to the use of nitrite, it is generally desirable to choose other compounds in preservative agents.
GB-A-1432954 discloses a composition for the preservation of silage which comprises sodium nitrate and calcium formate amongst other ingredients.

The main object of the present invention was to provide a product for the ensiling of grass and other agricultural crops which would restrict undesired microbes and at the same time allow the epiphytic lactic acid bacteria (LAB) that is already present on the crop (epiphytic flora) to grow.

It was a further object to still keep the efficacy as an acid silage agent, the good handling properties of the acid/salt mixtures (non-corrosive to skin) and the low corrosivity to steel.

These and other objects of the invention are obtained by the product as described below. The invention is further defined and characterized by the patent claims.

The invention as claimed solves the problem of undesired bacteria growth in silage and stimulates the desired process of lactic acid fermentation. The pH is kept in a preferred range during the preservation.

It was found that adding small amounts of lactose or lactose derivatives to a preservative comprising formic acid or formate salts or mixtures of formic acid and formate salts would be favourable. At a dosage of 2 - 6 litres per ton the preservative would restrict undesired microbes and stimulate the growth of epiphytic lactic acid bacteria during ensilage of agricultural crops.

A small amount of lactose from lactose permeate or whey was added because this sugar was believed to be more easily fermented by LAB than by other organisms. Especially the galactose part of lactose is specifically a substrate for lactic acid bacteria. Using for example glucose or sucrose could as well encourage growth of yeast in the silage and not necessarily stimulate LAB. The hypothesis was further that adding lactose at the same time and place as the acid, would help the LAB exactly where it was needed. Adding extra sugar to LAB when they are in acid stress, gives them energy to pump out H⁺ ions and keep internal pH stable. It was surprising, though, that such a low dosage of lactose (1-3 weight % of the additive) was enough to give a significantly quicker drop in pH.

The idea of using lactose from lactose permeate or whey is an additional advantage. Whey and whey residues are available in big volumes at a low price. Further, the dairies have problems finding good use for it, and some is disposed with potential environmental affects. To get a convenient lactose product, drying lactose permeate to approx. 20 - 25 % dry matter is preferable. At this concentration lactose is well dissolved without crystals, but still it is concentrated to keep transport costs down. Lactose powder (dry) would also be convenient, but then drying costs would add significantly to the product price. Galactose, which is derived from lactose, could be used instead of or in addition to lactose.

The formate salts should comprise ammonium ions and/or potassium ions and/or sodium ions. A suitable range for potassium would be 1 - 6 weight % and for sodium 1 - 10 weight %. The preservative could also comprise 3-10 weight % ammonia. Glycerol can be added in amounts of 0.5 - 5 weight %, preferably 0.75 - 1.5 weight %. If the preservative mainly comprises formic acid, it could be necessary to add a corrosion inhibitor. For some applications it could be desirable that the preservative comprises organic acids such as benzoic acid and/or propionic acid. The amounts of benzoic acid and propionic acid would be in the range of 1 - 3 weight % and 5-20 weight %, respectively.

To improve the technical properties of the preservative it could be convenient to add colorants and anti foaming agents. Colorants may preferably be present in amounts of 0 - 0.1 weight %, and anti foaming agents may preferably be present in amounts of 0 - 0.05 weight %. An anti foaming agent is often used if a corrosion inhibitor is added to the preservative, since corrosion inhibitors sometimes cause foaming in the preservative.

The aqueous preservative/acidifier according to the invention comprises 50-85 % formic acid or formate salts or mixtures of formic acid and formic salts and 0.5 - 10 weight % lactose and/or lactose derivatives. Preferably, the aqueous preservative comprises 1-3 weight % lactose and/or lactose derivatives. The lactose may be derived from lactose permeate, preferably after drying of same to a typical content of 20 - 25 % lactose. The lactose may also be derived from whey. The preservative may comprise galactose, which is derived from lactose, instead of or in addition to lactose. The formate salts may comprise ammonium ions and/or potassium ions and/or sodium ions. The preservative may comprise 3-10 weight % ammonia. The preservative may also comprise 0.5 - 5 weight % glycerol, preferably 0.75 - 1.5 weight % glycerol. 1-3 weight % benzoic acid and/or 5-20 weight % propionic acid may also be added to the preservative. Most preferred, the preservative comprises 70 - 80 weight % formic acid, 6-7 weight % ammonia, 1-2 weight % potassium, 0.75 - 1.5 weight % glycerol and 1.5 - 2.5 weight % lactose.

The invention is further explained and envisaged in the following example and figures.
- Fig. 1: shows the pH-development when additives were applied at 3 litres/ton.
- Fig. 2: shows the pH-development when additives were applied at 4 litres/ton.

### Example

Grass was harvested in the southeast of Norway, spring 2002 in good weather. The sward cut at a leafy stage of growth comprised mainly timothy, meadow fescue and red clover. The grass was direct cut using a precision chop harvester (dry matter content 165 g/kg). Equal portions of grass were weighed out and kept on a plastic sheet. Silage additives were applied using a pipette and the grass was thoroughly mixed by hand prior to ensiling in jar-silos. Jars were kept at approx. 18 - 20 °C during fermentation. Six replicate jars were prepared for each additive and application rate, and two jars were opened for analysis after 1 week, 3 weeks and 6 weeks of fermentation.

Silage samples were analysed according to common procedures to determine dry matter content, pH, nitrogen, ammonia-N and organic acids, as described by I. Selmer-Olsen, 1994, Grass and Forage Science 49, 305 - 315. The term ammonia-N as percentage of total N is commonly used to describe how well grass protein is preserved. The higher number, the more grass protein is broken down during fermentation. Some silage additives contain ammonia, and to get a fair evaluation of protein breakdown, this figure is corrected by subtracting the ammonia-N from the additive.

Chemical composition of the additives and silage fermentation characteristics are given in Tables 1 and 2.

Table 1 shows silage additives and silage characteristics after 1, 3 and 6 weeks of fermentation. The application rate was 3 litres/ton.

Table 2 shows silage additives and silage characteristics after 1, 3 and 6 weeks of fermentation. The application rate was 4 litres/ton.

In both Tables, treatment 1 (untreated) and 2 (plain formic acid) were included as control treatments. Treatments 3 and 4 were included to assess the effect of formic acid/formate mixtures, which are easier to handle. It has been found that using a mixture of formic acid, ammonium formate and potassium- or sodium formate makes the additive less irritating to skin as compared to only formic acid/ammonium formate mixtures (reference is made to WO 01/19207 A1). Also glycerol has a positive effect on skin reactions (reference is made to WO 00/08929). However, significant differences between treatments 3 and 4 as far as pH and fermentation products were concerned could not be observed. It can therefore be ruled out that potassium and glycerol in the additive would be sufficient to stimulate lactic acid fermentation in the early phases of ensilage.

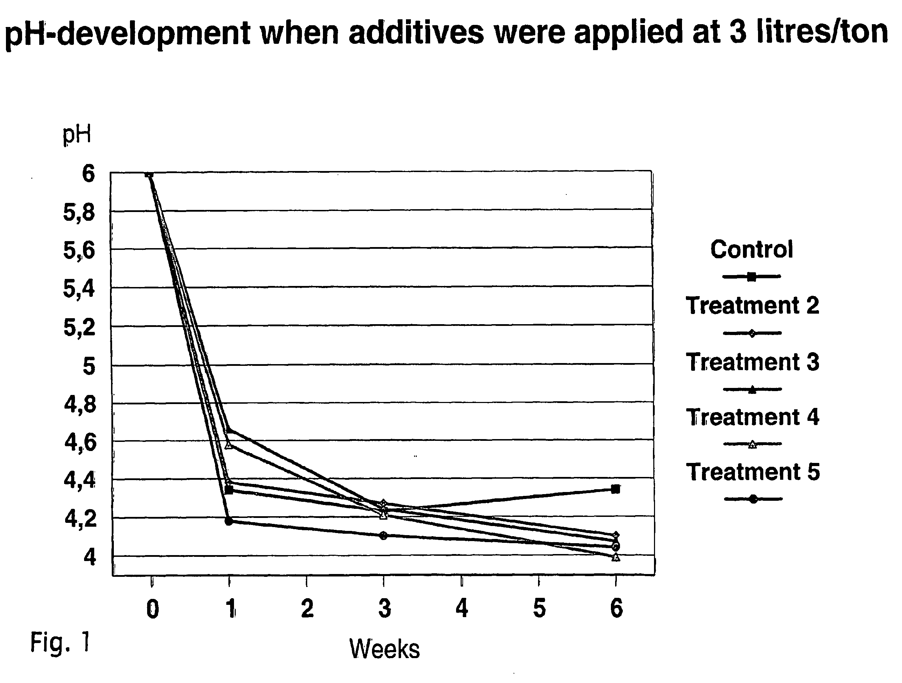

In Table 1, where additives were applied at 3 litres/ton (3 ml/kg), treatment 5 had significantly lower pH than the other treatments both at 1 week and at 3 weeks fermentation. The lower pH was related to increased contents of both lactic acid and acetic acid in the silage. The slightly lower doses of formic acid applied with treatment 5 compared with treatments 2, 3 and 4 could not explain why lactic acid fermentation was so much stimulated in the early phases. There was obviously an effect of including lactose in the additive. The pH-development when additives were applied at 3 litres/ton is illustrated in Fig. 1.

**Table 1. Silage additives and silage fermentation quality at 1, 3 and 6 weeks fermentation. Application rate 3 litres/ton.**

| | **Treatment 1** | **Treatment 2** | **Treatment 3** | **Treatment 4** | **Treatment 5** |
|---|---|---|---|---|---|
| Composition of additive (water up to 100%) | none | 85% FA | 84% FA | 82,6% FA | 76,7% FA |
| | | | 9%NH₃ | 7,3% NH₃ | 6,8% NH₃ |
| | | | | 1,5% K | 1,5% K |
| | | | | 1,0% glycerol | 1,0% glycerol |
| | | | | | 2% lactose |
| Application rate, l/t | 0 | 3 | 3 | 3 | 3 |
| Applied FA, l/t | 0 | 2.55 | 2.52 | 2.48 | 2.30 |
| 1 week silage | | | | | |
| pH | 4.34 | 4.38 | 4.66 | 4.58 | 4.18 |
| Lactic acid, % | 1.37 | 0.14 | 0.23 | 0.21 | 0.68 |
| Acetic acid, % | 0.21 | 0.06 | 0.05 | 0.05 | 0.22 |
| Butyric acid, % | 0.00 | 0.00 | 0.00 | 0.00 | 0.00 |
| 3 week silage | | | | | |
| pH | 4.23 | 4.27 | 4.24 | 4.21 | 4.10 |
| Lactic acid, % | 2.06 | 0.60 | 0.96 | 0.79 | 0.86 |
| Acetic acid, % | 0.31 | 0.25 | 0.20 | 0.16 | 0.25 |
| Butyric acid, % | 0.00 | 0.10 | 0.00 | 0.00 | 0.00 |
| 6 week silage | | | | | |
| pH | 4.34 | 4.10 | 4.07 | 3.99 | 4.04 |
| Lactic acid, % | 1.41 | 0.75 | 1.25 | 1.26 | 1.01 |
| Acetic acid, % | 0.25 | 0.24 | 0.23 | 0.25 | 0.29 |
| Butyric acid, % | 0.29 | 0.14 | 0.00 | 0.00 | 0.00 |
| NH₃-N % of total N | 11.9 | 4.9 | 7.6 | 5.7 | 6.0 |
| (corrected*) | | | | | |

| | | | | | |
|---|---|---|---|---|---|
| FA=formic acid, K= potassium (in potassium formate), NH₃ = ammonia, * corrected for ammonia-N applied with the additive | | | | | |

**Table 2. Silage additives and silage fermentation quality at 1, 3 and 6 weeks fermentation. Application rate 4 litres/ton.**

| | **Treatment 1** | **Treatment 2** | **Treatment 3** | **Treatment 4** | **Treatment 5** |
|---|---|---|---|---|---|
| Composition of additive (water up to 100%) | none | 85% FA | 84% FA | 82,6% FA | 76,7% FA |
| | | | 9% NH₃ | 7,3% NH₃ | 6,8% NH₃ |
| | | | | 1,5% K | 1,5% K |
| | | | | 1,0% glycerol | 1,0% glycerol |
| | | | | | 2% lactose |
| Application rate, l/t | 0 | 4 | 4 | 4 | 4 |
| Applied FA, l/t | 0 | 3.40 | 3.36 | 3.30 | 3.07 |
| 1 week silage | | | | | |
| pH | 4.34 | 4.18 | 4.41 | 4.55 | 4.33 |
| Lactic acid, % | 1.37 | 0.00 | 0.22 | 0.07 | 0.34 |
| Acetic acid, % | 0.21 | 0.02 | 0.09 | 0.06 | 0.13 |
| Butyric acid, % | 0.00 | 0.00 | 0.00 | 0.00 | 0.00 |
| 3 week silage | | | | | |
| pH | 4.23 | 4.44 | 4.09 | 4.09 | 4.08. |
| Lactic acid, % | 2.06 | 0.24 | 0.68 | 0.71 | 0.67 |
| Acetic acid, % | 0.31 | 0.16 | 0.24 | 0.26 | 0.22 |
| Butyric acid, % | 0.00 | 0.03 | 0.00 | 0.00 | 0.00 |
| 6 week silage | | | | | |
| pH | 4.34 | 4.12 | 4.16 | 4.12 | 4.09 |
| Lactic acid, % | 1.41 | 0.66 | 0.78 | 0.86 | 0.82 |
| Acetic acid, % | 0.25 | 0.25 | 0.30 | 0.32 | 0.26 |
| Butyric acid, % | 0.29 | 0.18 | 0.06 | 0.07 | 0.00 |
| NH₃-N % of total N | 11.9 | 4.9 | 6.6 | 6.0 | 5.5 |
| (corrected *) | | | | | |

| | | | | | |
|---|---|---|---|---|---|
| FA=formic acid, K= potassium (in potassium formate), NH₃ = ammonia, * corrected for ammonia-N applied with the additive | | | | | |

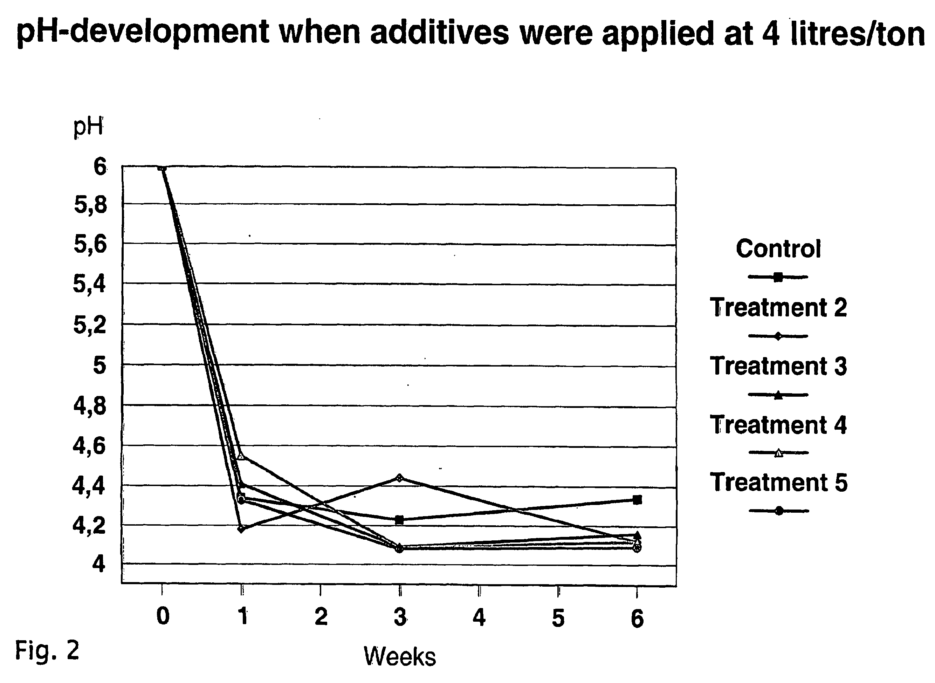

In Table 2 the additives were applied at 4 litres/ton (4 ml/kg). It was observed very little fermentation products at week 1 due to the higher rate of formic acid/formate salts. In some cases low pH at week 1 was due to the acid applied with the additive (treatment 2). Treatment 5 with 2 % lactose in the additive gave more lactic acid and lower pH than the other acid treatments at week 1. After 6 weeks this treatment was the only one able to give silage totally free of butyric acid. The NH₃ - N % of total N indicated also well-preserved silage with only little protein breakdown. Fig. 2 shows the pH-development when additives were applied at 4 litres/ton.

Even small amounts of lactose in an ammonium tetraformate (ATF) -based silage additive can at certain application rates speed up fermentation and bring pH down more quickly. In turn this will give less time for protein breakdown (aminonia-N) and better silage quality. By combining the direct acidification of the formic acid-based silage additive with a lactic acid type of fermentation commencing during the early phases, the silage additive will work efficiently under various conditions and application rates. The desired composition of the additive would be the one used in treatment 5.

## Claims

1. Aqueous preservative/acidifier for ensiling of grass and other agricultural crops, comprising 50-85 weight % formic acid or formate salts or mixtures of formic acid and formate salts, **characterized in that** the preservative/acidifier comprises 0.5 - 10 weight % lactose and/or lactose derivatives.

2. Aqueous preservative/acidifier according to claim 1, **characterized in that** the preservative/acidifer comprises 1 - 3 weight % lactose.

3. Aqueous preservative/acidifier according to claim 1 or claim 2, **characterized in that** the preservative/acidifier comprises lactose, which is derived from lactose permeate, preferably after drying of same to a typical content of 20 - 25 % lactose.

4. Aqueous preservative/acidifier according to claim 1 or claim 2, **characterized in that** the preservative/acidifier comprises lactose, which is derived from whey.

5. Aqueous preservative/acidifier according to claim 1 or claim 2, **characterized in that** the preservative/acidifier comprises galactose, which is derived from lactose, instead of or in addition to lactose.

6. Aqueous preservative/acidifier according to any one of the preceding claims, **characterized in that** the formate salts comprise ammonium ions and/or potassium ions and/or sodium ions.

7. Aqueous preservative/acidifier according to any one of the preceding claims, **characterized in that** the preservative comprises 3-10 weight % ammonia.

8. Aqueous preservative/acidifier according to any one of the preceding claims, **characterized in that** the preservative comprises 0.5 - 5 weight % glycerol, preferably 0.75 - 1.5 weight % glycerol.

9. Aqueous preservative/acidifier according to any one of the preceding claims, **characterized in that** the preservative comprises 1-3 weight % benzoic acid and/or 5-20 weight % propionic acid.

10. Aqueous preservative/acidifier according to any one of the preceding claims, **characterized in that** the preservative comprises 70 - 80 weight % formic acid, 6-7 weight % ammonia, 1 - 2 weight % potassium, 0.75 - 1.5 weight % glycerol and 1.5 - 2.5 weight % lactose.

## Patentansprüche

1. Wässriges Konservierungsmittel/Säuerungsmittel zur Silierung von Gras und anderen Nutzpflanzen, das 50 bis 85 Gew.% Ameisensäure oder Formiatsalze oder Mischungen von Ameisensäure und Formiatsalzen enthält, **dadurch gekennzeichnet, dass** das Konservierungsmittel/Säuerungsmittel 0,5 bis 10 Gew.% Lactose und/oder Lactosederivate enthält.

2. Wässriges Konservierungsmittel/Säuerungsmittel nach Anspruch 1, **dadurch gekennzeichnet, dass** das Konservierungsmittel/Säuerungsmittel 1 bis 3 Gew.% Lactose enthält.

3. Wässriges Konservierungsmittel/Säuerungsmittel nach Anspruch 1 oder Anspruch 2, **dadurch gekennzeichnet, dass** das Konservierungsmittel/Säuerungsmittel Lactose enthält, die aus Lactosepermeat, vorzugsweise nach dem Trocknen derselben bis zu einem typischen Gehalt von 20 bis 25 % Lactose, stammt.

4. Wässriges Konservierungsmittel/Säuerungsmittel nach Anspruch 1 oder Anspruch 2, **dadurch gekennzeichnet, dass** das Konservierungsmittel/Säuerungsmittel Lactose enthält, die aus Molke stammt.

5. Wässriges Konservierungsmittel/Säuerungsmittel nach Anspruch 1 oder Anspruch 2, **dadurch gekennzeichnet, dass** das Konservierungsmittel/Säuerungsmittel Galactose enthält, die von Lactose abgeleitet ist, anstelle von oder zusätzlich zu Lactose.

6. Wässriges Konservierungsmittel/Säuerungsmittel nach irgendeinem der vorhergehenden Ansprüche, **dadurch gekennzeichnet, dass** die Formiatsalze Ammoniumionen und/oder Kaliumionen und/oder Natriumionen enthalten.

7. Wässriges Konservierungsmittel/Säuerungsmittel nach irgendeinem der vorhergehenden Ansprüche, **dadurch gekennzeichnet, dass** das Konservierungsmittel 3 bis 10 Gew.% Ammoniak enthält.

8. Wässriges Konservierungsmittel/Säuerungsmittel nach irgendeinem der vorhergehenden Ansprüche, **dadurch gekennzeichnet, dass** das Konservierungsmittel 0,5 bis 5 Gew.% Glycerin, vorzugsweise 0,75 bis 1,5 Gew.% Glycerin, enthält.

9. Wässriges Konservierungsmittel/Säuerungsmittel nach irgendeinem der vorhergehenden Ansprüche, **dadurch gekennzeichnet, dass** das Konservierungsmittel 1 bis 3 Gew.% Benzoesäure und/oder 5 bis 20 Gew.% Propionsäure enthält.

10. Wässriges Konservierungsmittel/Säuerungsmittel nach irgendeinem der vorhergehenden Ansprüche, **dadurch gekennzeichnet, dass** das Konservierungsmittel 70 bis 80 Gew.% Ameisensäure, 6 bis 7 Gew.% Ammoniak, 1 bis 2 Gew.% Kalium, 0,75 bis 1,5 Gew.% Glycerin und 1,5 bis 2,5 Gew.% Lactose enthält.

## Revendications

1. Agent conservateur/acidifiant aqueux pour l'ensilage d'herbe ou d'autres récoltes agricoles, comprenant 50-85 % en masse d'acide formique ou de sels de formiates ou de mélanges d'acide formique et de sels de formiates, **caractérisé en ce que** l'agent conservateur/acidifiant comprend 0,5 - 10 % en masse de lactose et/ou de dérivés de lactose.

2. Agent conservateur/acidifiant aqueux selon la revendication 1, **caractérisé en ce que** l'agent conservateur/acidifiant comprend 1 - 3 % en masse de lactose.

3. Agent conservateur/acidifiant aqueux selon la revendication 1 ou la revendication 2, **caractérisé en ce que** l'agent conservateur/acidifiant comprend du lactose, qui est dérivé de perméat de lactose, de préférence après séchage du même jusqu'à une concentration typique de 20 - 25 % en lactose.

4. Agent conservateur/acidifiant aqueux selon la revendication 1 ou la revendication 2, **caractérisé en ce que** l'agent conservateur/acidifiant comprend du lactose, qui est dérivé du lactosérum.

5. Agent conservateur/acidifiant aqueux selon la revendication 1 ou la revendication 2, **caractérisé en ce que** l'agent conservateur/acidifiant comprend du galactose, qui est dérivé du lactose, à la place ou en plus du lactose.

6. Agent conservateur/acidifiant aqueux selon l'une quelconque des revendications précédentes, **caractérisé en ce que** les sels de formiates comprennent des ions ammoniums et/ou des ions potassium et/ou des ions sodium.

7. Agent conservateur/acidifiant aqueux selon l'une quelconque des revendications précédentes, **caractérisé en ce que** l'agent conservateur comprend 3 - 10 % en masse d'ammoniaque.

8. Agent conservateur/acidifiant aqueux selon l'une quelconque des revendications précédentes, **caractérisé en ce que** l'agent conservateur comprend 0,5 - 5 % en masse de glycérol, de préférence 0,75 - 1,5 % en masse de glycérol.

9. Agent conservateur/acidifiant aqueux selon l'une quelconque des revendications précédentes, **caractérisé en ce que** l'agent conservateur comprend 1 - 3 % en masse d'acide benzoïque et/ou 5 - 20 % en masse d'acide propionique.

10. Agent conservateur/acidifiant aqueux selon l'une quelconque des revendications précédentes, **caractérisé en ce que** l'agent conservateur comprend 70-80 % en masse d'acide formique, 6 - 7 % en masse d'ammoniaque, 1 - 2 % en masse de potassium, 0,75-1,5 % en masse de glycérol et 1,5 - 2,5 % en masse de lactose.
